# EUROPEAN PATENT APPLICATION

(11) **EP 2 048 068 A2**
(43) Date of publication of application: **15.04.2009**
(21) Application number: 08166462.5
(22) Date of filing: 13.10.2008
(51) Int. Cl.: B62J 9/00

(54) **Bicycle bag provided with a hook assembly**

(30) Priority: 12.10.2007 NL 1034508
(71) Applicant: Pointed International Limited, Fo Tan, Sha Tin, N.T. Hong Kong (CN)
(72) Inventor: Drapers-Ma, Chak Ying Grace, Shatin Hong Kong (CN)
(74) Representative: Brookhuis, Hendrik Jan Arnold

(57) **Abstract**

A bicycle bag that is provided with a hook assembly on a vertical side wall thereof for fixing the bicycle bag to the bar of a bicycle, in particular, a bar of a luggage rack of a bicycle. This hook assembly comprising:
- two fixing hook members (1) at a distance next to each other;
- a locking hook member (10) arranged between the fixing hooks.

Each fixing hook member is arranged to grip over the bar from the top and be suspended thereby.

The locking hook member comprising a base (11) mounted on the bicycle bag and a locking hook (12) that is arranged to hook under the relevant bar.

The locking hook having a manual handling device and can be tilted by the user between a hook position in which the locking hook grips under the bar and a passing position that is tilted outwards in which the hook can pass the bar to position and remove the bicycle bag. The locking hook being height adjustable with regard to the base (11) for adjusting to the diameter of the bar of the bicycle.

## Description

The invention relates to a bicycle bag that is provided with a hook assembly on a vertical side wall thereof for fixing the bicycle bag to a bar of a bicycle, in particular, a bar of a luggage rack of a bicycle.

Bicycle bags provided with a hook assembly according to the preamble of claim 1 are known from the state-of-the-art, in particular, under the brand name of Fast Rider. In these known bicycle bags, the locking hook member is provided with a locking hook that has been fasted to the base with a tightening bolt. This tightening bolt runs through a hole in a horizontal part of the base, wherein a turning knob is provided at the top of the tightening bolt that can be turned by the user. The tightening bolt extends into a threaded hole in the locking hook, wherein a spring is provided around the tightening bolt that presses the locking hook downwards with regard to the horizontal part of the base. The tightening bolt runs through the hole with a clearance in such a way that the tightening bolt and, therefore, the locking hook, can be tilted. When the bicycle bag is positioned, the user fits the bag with its hooks on the bar of the luggage rack, wherein the locking hook grips under this bar. By subsequently handling the turning knob, the locking hook can be moved upwards and pulled against the bar. This allows to correctly fasten the bag even on bars with different diameters as is often the case in practice, in particular with regard to luggage racks. The turning knob has a small diameter to ensure that the locking hook cannot be tightened too tightly leading to a possible overloaded construction thereof.

In practice it turned out that the aforementioned known bicycle bags are not completely satisfactory. In particular, the operation of the small turning knob is experienced as being time-consuming.

It is an object of the invention to provide an improved bicycle bag.

This object is realised with a bicycle bag according to the preamble of claim 1 **characterized in that** the locking hook member comprises a sliding part that is slidably guided in height with regard to the base in such a way that the height of the sliding part can be varied by the user, and in that the locking hook is arranged in a tiltable manner on the sliding part, wherein the locking hook member further comprises a locking means for maintaining a by the user desired position in the height direction.

This embodiment with a sliding part offers the option of easy handling for the user and constructive stability of the locking hook member.

The invention also relates to a hook assembly arranged for mounting to a bicycle bag according to the invention.

Advantageous embodiments of the hook assembly and the bicycle bag according to the invention, in particular, of the hook assembly, are described in subsequent claims and the description below based on the drawing. In the drawing:
Figure 1 shows in perspective a preferred embodiment of the hook assembly of a bicycle bag, which is not shown, according to the invention;
Figure 2 shows the hook assembly of Figure 1 fixed to a bar of a luggage rack that is not shown;
Figure 3 shows the locking hook member of the hook assembly of Figure 1 in front view;
Figure 4 shows a cross section of the locking hook member along the A-A line in Figure 3;
Figure 5 shows the locking hook member of Figure 3 in side view; and
Figs 6a-c show the hook assembly of Figure 1 in combination with bars that have different diameters both in front view and in side view.

A preferred embodiment of the hook assembly of a bicycle bag according to the invention that is further not shown will be explained based on the drawing. As already mentioned, the shown hook assembly is usually mounted on the vertical side wall of the bicycle bag, in practice, the side wall that can be found along the rear wheel of the bicycle when the bicycle bag is fixed to a luggage rack.

A 'bottom fastener', if required, that can also be fixed onto the relevant side wall of the bicycle and that fastens the bottom of the bicycle bag to the bicycle is not shown on the drawing.

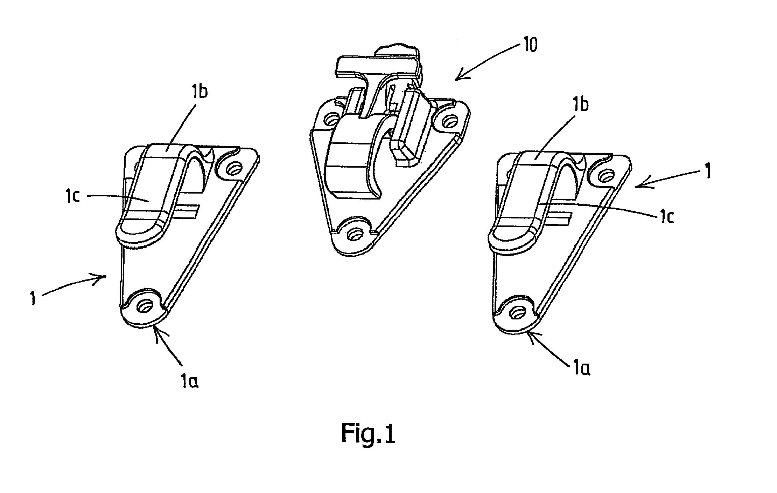

Figure 1 shows the hook assembly with two fixing hook members 1 at a distance next to each other and a locking hook member 10 arranged between the hooks.

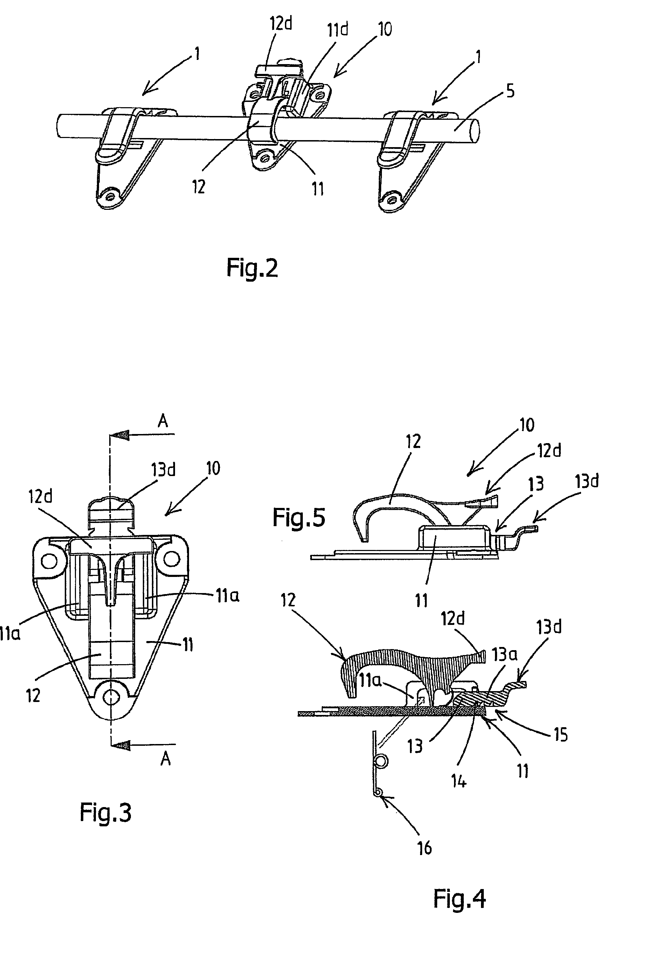

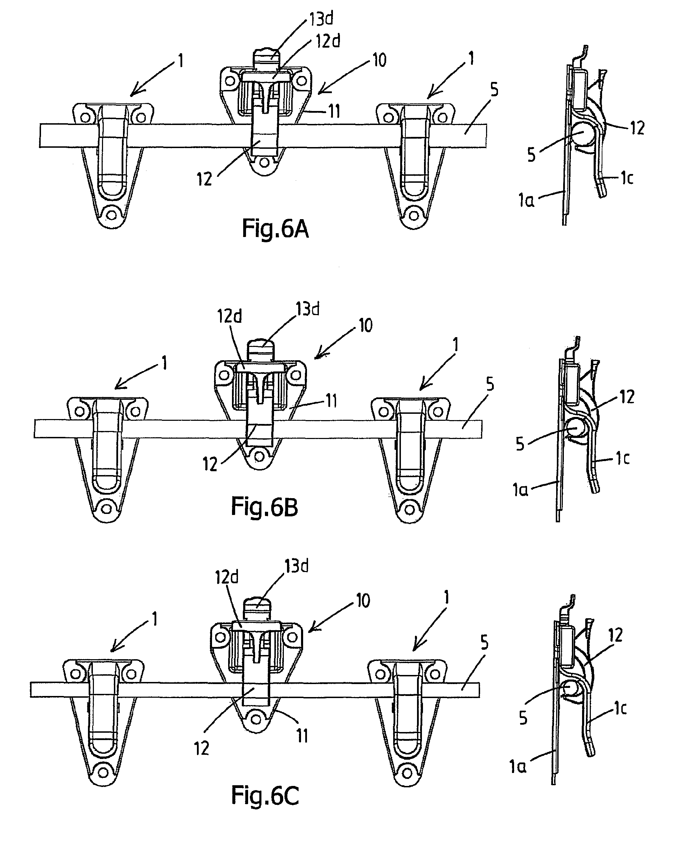

The fixing hook members 1 are each arranged to grip over the bar 5 from the top (see Figures 2 and 6a-c) and to be suspended thereby.

The shown fixing hook members are here integrally made of plastic and have a base 1a with mounting holes and an integral hook body 1 b with a hook lip 1 c pointing downwards. The portion supported by the bar is here provided with a rounding.

In this example, the fixing hook members 1 are rigid hook members that in this example have been fastened separately from each other and to the side wall of the bicycle bag.

In a variant not shown here, the fixing hook members (and, if required, also the locking hook member) have been mounted on a common hook base, which may be a horizontal hook rail where the fixing hook members (and, if required, the locking hook member) can be positioned next to each other in adjustable positions.

In a variant, the fixing hook members are each provided with a base and a pivotable hook that is pivotable about a substantially vertical axis with regard to the base. This offers the option to pivot these hooks against the side wall of the bag when the bag has been removed from the bicycle.

The locking hook member 10 comprises a base 11 and a locking hook 12 mounted on the side wall of the bicycle bag that is arranged to hook under the respective bar 5.

In greater detail, the locking hook member 10 has a sliding part 13 that is slidably guided in the height direction with regard to the base 11 in such a way that the user can vary the height of the sliding part 13. The locking hook 12 is installed in a tiltable manner onto the sliding part 13. The locking hook member 10 also comprises locking means for maintaining the by the user desired position in height.

The user can, therefore, set the height of the hook 12 that grips under the bar 5 due to the aforementioned configuration by sliding the sliding part 13 up and then securing the desired position (preferably without clearance between the hook 12 and bottom of the bar 5).

The sliding part can be slid in height direction over a range of at least 5 millimetres, preferably between 7 and 10 millimetres in the shown preferred embodiment. This, for example, offers the option of fastening the bag to bars with a diameter difference of approximately 5 millimetres (for example between an 8 and 13 millimetre diameter).

The base 11 is here provided with two upright ribs 11 a, wherein the sliding part 13 is slidably guided in the height direction.

The assembly of the locking hook 12 and sliding part 13 is here arranged to be pulled upwards by the user with one or more fingers of a hand, and is therefore provided with a suitable handling device.

In the shown preferred embodiment, the locking hook 12 is provided at the top with a handling device 12d with at least a transverse part that can be gripped by the user with at least one finger to exert a tensile force upwards on the locking hook 12 and, thus, on the sliding part 13 in order to pull the sliding part upwards.

As is preferred, this handling device 12d is provided in a T-shape so that the user can grip under the transverse parts of the T using two adjacent fingers.

Gripping the handling device 12d of the hook 12 also makes it possible for the user to tilt the hook 12, which is relevant, in particular, when removing the bicycle bag. The hook can then be tilted by the user between a hook position in which the locking hook 12 grips under the bar 5 and a passing position tilted outwards in which the hook 12 can pass the bar 5 to position and remove the bicycle bag.

In this example, the locking hook member 10 has a spring 16 that forces the hook 12 to its hook position.

The sliding part 13 has a bendable part 13a at its top part that can easily be bent forward by the user. This part 13 normally lies with its rear against the base 11 (see Figure 4) and can then be bent forwards.

The base 11 is provided with a dowel 14 at the rear of the respective bendable part 13a of the sliding part 13. A series of recesses 15 are also provided at the rear of the bendable part 13a of the sliding part 13 wherein this dowel 14 fits to secure the position of the sliding part 13. When the user bends the part 13a forwards, the lock is released and the sliding part 13 is again slidable. The sliding part 13 is provided with a handling device 13d, here a lip, at the top of the bendable part 13a to realise the bending, which the user can grip using at least one finger.

As is preferred, the handling device 12d and the handling device 13d are provided and arranged in such a way that both members 12d, 13d can be simultaneously operated with the fingers of a single hand. This offers the option of using the other hand to lift up the bag, for example, using the handle of the bag. This is, for example, beneficial when removing the bag, wherein the bendable part 13a is bent forwards and the hook is pressed downwards and also tilted to the passing position and, next, the bag is lifted.

In the shown embodiment, spring 16 that forces the hook 12 to its hooked position also forces the handling device 13d to a normal position in which the rear of the sliding part 13 lies against the base 11.

## Claims

1. . A bicycle bag that is provided with a hook assembly on a vertical side wall thereof for fixing the bicycle bag to the bar (5) of a bicycle, in particular, a bar of a luggage rack of a bicycle, said hook assembly comprising:
- two fixing hook members (1) at a distance next to each other;
- a locking hook member (10) arranged between the fixing hooks.
wherein each fixing hook member (1) is arranged to grip over the bar (5) from the top and be suspended thereby,
wherein the locking hook member (10) comprises:
- a base (11) mounted on the bicycle bag;
- a locking hook (12) that is arranged to hook under the respective bar,
wherein the locking hook (12) has a manual handling device (12d) and can be tilted by the user between a hook position in which the locking hook grips under the bar and a passing position that is tilted outwards in which the hook can pass the bar to position and remove the bicycle bag,
wherein the locking hook (12) is height adjustable with regard to the base (11) for adjusting to the diameter of the bar of the bicycle,
**characterized in that**
the locking hook member (10) comprises a sliding part (13) that is slidably guided with regard to the base (11) in the height direction, such that the user can vary the height of the sliding part (13), and **in that** the locking hook (12) is arranged in a tiltable manner on to the sliding part (13), wherein the locking hook member (10) further comprises locking means (13a, 14,15) for maintaining a by the user desired position in the height direction.

2. Bicycle bag according to claim 1, wherein the sliding part (13) is slidable in height over a range of at least 5 millimetres.

3. Bicycle bag according to claim 1 or 2, wherein the locking means (13a, 14, 15) define multiple discrete positions for the sliding part (13) with regard to the base (11).

4. . Bicycle bag according to claim 3, wherein the locking means comprise a dowel (14) and a series of recesses (15) for the dowel, preferably a dowel on the base (11) and a series of recesses in the sliding part (13a).

5. Bicycle bag according to claim 4, wherein a bendable portion (13a) of the sliding part (13) can be bent by the user between a position in which it is bearing against the base (11) with its rear side and a position bent forwards wherein, on the one hand, the base (11) - behind the respective bendable portion (13a) of the sliding part - and, on the other hand, the rear of the bendable portion of the sliding part are provided with a dowel (14) and a series of recesses (15) working together with the dowel so that the bending of the bendable portion (13a) corresponds to the uncoupling of the lock.

6. Bicycle bag according to one or more of the previous claims, wherein the base (11) of the locking hook member has two ribs (11 a) in which the sliding part (13) is slidably guided in height direction.

7. . Bicycle bag according to one or more of the preceding claims, wherein the locking hook (12) has a first handling device (12d) for the user to grip.

8. Bicycle bag according to one or more of the preceding claims, wherein the sliding part (13) has a second handling device (13d) at the top, for example, a lip that can be gripped by the user.

9. . Bicycle bag according to one or more of the preceding claims, wherein the assembly of locking hook and sliding part has at least one handling device (12d) that is arranged to pull the assembly upwards by the user.

10. Bicycle bag according to claim 9, wherein the locking hook (12) has a first handling device (12d) at the top with at least one transverse portion where the user can grip below with at least one finger to exert a tensile force upwards on the locking hook (12) and, thus, on the sliding part (13) in order to pull the sliding part upwards.

11. Bicycle bag according to claims 5 and 10, wherein the sliding part (13) has a second handling device (13d) at the top of the bendable portion (13a) that the user can grip with at least one other finger than the one or more fingers of the same hand with which the user simultaneously grips the first handling member (12d) of the locking hook (12) so that the user can bend the bendable portion of the sliding part (13) forwards and, at the same time, can pull the sliding part upwards and, when the second handling device (13d) is released, locks the sliding part.

12. Bicycle bag according to claim 11 or 12, wherein the first handling device (12d) is a T-shaped handling device that the user can grip with two adjacent fingers.

13. . Bicycle bag according to one or more of the preceding claims, wherein the outer fixing hook members (1) are rigid members.

14. . Bicycle bag according to one or more of the claims 1-12, wherein the outer fixing hook members each comprise a base and a pivotable hook, which is pivotable about a substantially vertical axis with regard to the base.

15. . Hook assembly arranged for mounting on a bicycle bag according to one or more of the preceding claims.
